# EUROPÄISCHE PATENTSCHRIFT

(11) **EP 1 780 435 B1**
(45) Veröffentlichungstag und Bekanntmachung des Hinweises auf die Patenterteilung: **09.11.2011**
(21) Anmeldenummer: 06018430.6
(22) Anmeldetag: 04.09.2006
(51) Int. Cl.: F16D 21/06, F16D 25/10, F16D 25/0638

(54) **Doppelkupplungseinrichtung in radialer Bauart**
Radially constructed dual clutch
Embrayage double en forme radial

(30) Priorität: 26.10.2005 DE 102005051511
(43) Veröffentlichungstag der Anmeldung: 02.05.2007
(73) Patentinhaber: ZF Friedrichshafen AG, 88046 Friedrichshafen (DE)
(72) Erfinder: Ebert, Angelika, 97453 Schonungen (DE); Grosspietsch, Wolfgang, 97422 Schweinfurt (DE); Fenn, Peter, 97534 Waigolshausen (DE); Reisser, Wolfgang, 71296 Heimsheim (DE)

(56) Entgegenhaltungen:
- WO-A-03/006840
- DE-A1-102004 015 927
- US-B1- 6 491 149

## Beschreibung

Die Erfindung betrifft eine Doppelkupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle des Getriebes zugeordnete erste Kupplungsanordnung und eine einer zweiten Getriebeeingangswelle des Getriebes zugeordnete zweite Kupplungsanordnung aufweist zur Momentenübertragung zwischen der Antriebseinheit und dem Getriebe, und wobei von den Getriebeeingangswellen wenigstens eine als Hohlwelle ausgebildet ist und eine der Getriebeeingangswellen durch die andere, als Hohlwelle ausgebildete Getriebeeingangswelle verläuft, und wobei die Kupplungsanordnungen als radial angeordnete nasslaufende Lamellen-Kupplungsanordnungen ausgebildet sind. Die Erfindung betrifft speziell eine derartige Doppelkupplungseinrichtung, bei der die Kupplungsanordnungen jeweils mit einem integrierten, sich im Betrieb mitdrehenden hydraulischen betätigbaren Betätigungskolben ausgeführt sind, über den die jeweilige Kupplungsanordnung auf hydraulischem Wege betätigbar ist, sowie eine derartige Kupplungseinrichtung, bei der die Kupplungsanordnungen für ein Laufen unter Einwirkung eines Betriebsmediums vorgesehen, insbesondere als nasslaufende Lamellen-Kupplungsanordnung ausgeführt sind, wobei abwechselnd angeordnete einem Innenlamellenträger zugeordnete Innenlamellen und einem Außenlamellenträger zugeordnete Außenlamellen zur Drehmomentübertragung in Reibeingriff bringbar sind und wobei ein mit dem Außenlamellenträger der radial äußeren Kupplungsanordnung drehfest verbundenes Drehmomentenübertragungsglied als Eingangsseite der Doppelkupplungseinrichtung dient und wobei und wobei die Kupplungsanordnungen eine gemeinsame Ölzufuhrnabe aufweisen, über welche die Kupplungseinrichtung mittels einer Lageranordnung auf mindestens einer der Getriebeeingangswellen gelagert oder lagerbar ist.

Es sind bereits Doppelkupplungseinrichtungen bekannt, z. Bsp. DE 100 04 179 A1, welche eine Doppelkupplungseinrichtung der eingangs genannten Art offenbaren. Hierbei ist die Doppelkupplungseinrichtung über eine Lageranordnung, welche zwischen einer Ölzuführnabe und der als Hohlwelle ausgebildeten äußeren Getriebeeingangswelle gelagert. Das Drehmoment wird von der Antriebseinheit über einen gegebenenfalls der Doppelkupplungseinrichtung vorgeschalteten Torsionsschwingungsdämpfer in das Drehmomentenübertragungsglied, welches die Eingangsseite der Doppelkupplungseinrichtung bildet eingeleitet. Nachteilig hierbei ist, dass bei einem radialen Achsversatz zwischen Antriebseinrichtung und Getriebe auf die Lageranordnung Zwangskräfte ausgeübt werden, welche von der Lageranordnung aufgenommen werden müssen. Weiterhin sind Doppelkupplungseinrichtungen aus der DE 103 27 729 A1 bekannt, bei welchen die Kolbenräume und die Rotationsdruckausgleichsräume mit speziellen an den Kolben und den Lamellenträgern angeschweißten separaten Dichtungsanordnungen abgedichtet sind. Hiermit werden auf die Bauteile aufvulkanisierte Dichtungen ersetzt, welche bei einem fehlerbehafteten Produktionsvorgang von Dichtungen den Ausschuss der im Vergleich zu den Dichtungen relativ teuren Kolben und Lamellenträgern nach sich zieht. Nachteilig hierbei sind jedoch die in Summe kostenintensiven Schweißvorgänge, da insgesamt vier Dichtungsanordnungen angeschweißt werden müssen, sowie die beiden Außenlamellenträger der Kupplungsanordnungen und die Begrenzungswandung des Rotationsdruckausgleichsraum der radial inneren Kupplung an der Ölzuführnabe angeschweißt werden müssen. Eine gattungsgemäße Doppelkupplungseinrichtung ist aus US-B1-6,491,149 bekannt.

Ausgehend hiervon ist es Aufgabe der Erfindung eine Doppelkupplungseinrichtung der aufgezeigten Art dahingehend zu verbessern, dass ein axialer Bauraumbedarf minimiert wird, sowie die Herstellung kostengünstiger ausgeführt werden kann.

Zur Lösung dieser Aufgabe wird eine Doppelkupplungseinrichtung gemäß Anspruch 1 vorgeschlagen. Erfindungsgemäß ist hierbei die zweite Lageranordnung als Rillenkugellager auf der inneren Getriebeeingangswelle ausgeführt. Höchstvorzugsweise dient hierbei das Rillenkugellager zur axialen und radialen Lagerung der Doppelkupplungseinrichtung. Vorteilhaft hierbei ist der geringe axiale Bauraumbedarf des Rillenkugellagers.

Ein Ausführungsbeispiel der Erfindung wird nachfolgend anhand der Figur näher erläutert.

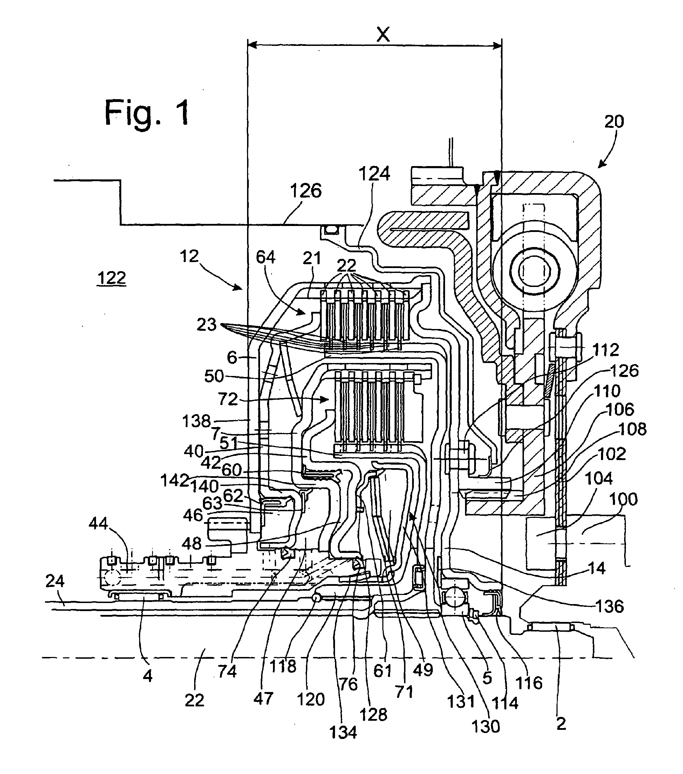

Fig.1 zeigt eine zweidimensionale Darstellung einer erfindungsgemäßen Doppelkupplungseinrichtung

In Fig.1 ist eine Doppelkupplungseinrichtung 12 dargestellt, welche als Doppelkupplung mit zwei radial angeordneten Lamellenkupplungen 64, 72 ausgebildet ist. Die beiden Lamellenkupplungen werden mittels rotierender Betätigungskolben 40, 42 hydraulisch betätigt, wobei über eine nicht dargestellte Hydraulikeinheit Druckmedium, vorzugsweise Hydrauliköl, über die Ölzuführnabe 44 in die beiden Kolbenräume 46, 48 gefördert wird. Die Kolbenräume 46, 48 sind radial außen über Dichtungsanordnungen 60, 62 abgedichtet und radial innen über Dichtungselemente 74, 76, welche in Ringnuten in der Ölzuführnabe angeordnet sind. Das Drehmoment wird über den Kurbelwellenflansch 100 einer nicht näher dargestellten Antriebseinheit über einen Torsionsschwingungsdämpfer 20 in die Doppelkupplungseinrichtung 12 eingeleitet. Hierzu ist die Primärseite 102, welche aus axial elastisch ausgebildeten gehärteten Blechen besteht, mittels einer Verschraubung 104 direkt ohne Zwischenschalten eines Sicherungsscheibe am Kurbelwellenflansch 100 angeschraubt. Die Sekundärseite 106 des Torsionsschwingungsdämpfers 20 ist mit einem axialen Außenverzahnungsbereich 108 am Koppelelement 110, welches am Innenumfang einen korrespondierenden Innenverzahnungsbereich aufweist drehverkoppelt. Das Koppelelement 110 ist mit einem Niet 112 am Drehmomentübertragungsglied 14 befestigt. Das Drehmomentübertragungsglied 14ist mit seinem Außenumfang in einem Falz am zylindrischen Ende des Lamellenträgers 6 verschweißt. Am Innenumfang des Außenlamellenträgers 6 ist ein Verzahnungsprofil ausgebildet, welches die sieben Außenlamellen 22 drehfest aufnimmt. Dazu sind die Außenlamellen an ihrem Außenumfang mit einer dazu korrespondierenden Außenverzahnung ausgebildet. Am endseitigen Zylinderabschnitt des Lamellenträgers 6 läuft das Verzahnungsprofil 21 nach radial außen hin aus, wodurch am endseitigen Zylinderabschnitt ein zylindrischer Randbereich ausgebildet ist, in welchem der Falz eingedreht ist. Das Drehmoment der Antriebseinheit wird erfindungsgemäß für beide Lamellen-Kupplungsanordnungen 64, 72 über die Schweißverbindung auf den Lamellenträger 6 übertragen, von wo aus bei Drehmomentübertragung über die Lamellen-Kupplungsanordnung 64 über das Verzahnungsprofil 21 in die Außenlamellen und von dort aus bei betätigter Kupplung durch Reibschluss auf die belagtragenden Innenlamellen 23 und den Innenlamellenträger 50 auf die äußere Getriebeeingangswelle 22 in ein nicht dargestellte Doppelkupplungsgetriebe übertragen wird. Im Fall der Drehmomentübertragung über die Lamellenkupplung 72 wird das Drehmoment ausgehend von der Antriebseinheit über das Drehmomentübertragungsglied 14 durch die Schweißverbindung auf den Lamellenträger 6 und die Ölzufuhrnabe 44 übertragen und von dort aus über den Außenlamellenträger 7 in die radial innere Kupplungsanordnung 72, welche über ihr Lamellenpaket das Drehmoment bei Betätigung auf den Innenlamellenträger 51 und die äußere, als Hohlwelle ausgebildete, Getriebeeingangswelle 24 in das Doppelkupplungsgetriebe überträgt. Die innere Getriebeeingangswelle 22 ist mittels der Lageranordnung 2 im Kurbelwellenflansch 100 gelagert. Die Ölzuführungsnabe 44 ist mittels des Nadellagers 4 auf der äußeren Getriebeeingangswelle 24 gelagert. Zwischen dem Drehmomentübertragungsglied 14 und der inneren Getriebeeingangswelle 22 ist das Rillenkugellager 5 angeordnet, welches zwischen einem Axialsicherungselementes 114 und einer Nabe des Innenlamellenträgers 50 angeordnet ist. Zur Fixierung des Rillenkugellagers 5 im Drehmomentübertragungsglied 14 ist an diesem eine Sicherungsscheibe 136 angeschweißt. Motorseitig neben dem Sicherungsring 114 ist der Radialwellendichtring 116 angeordnet. Alternativ kann auch das Rillenkugellager 5 mit integrierter Dichtscheibe ausgebildet sein, wodurch der separate Radialwellendichtring 116 entfallen kann. Zur axialen Sicherung in Richtung Getriebe ist ein in die Getriebeeingangswelle 24 eingelegter Runddrahtring 118 vorgesehen, welcher als Axialanschlag der Nabe 120 des Innenlamellenträgers 51 dient. Am Außenumfang des Koppelementes 110 ist die den Nassraum 122 begrenzende Wandung 124 mittels des Dichtelementes 126 dichtend geführt. Die Wandung 124 ist an ihrem Außenumfang drehfest im Getriebegehäuse 126 angeordnet. Die Dichtungsanordnung 61, welche den Rotationsdruckausgleichsraum 49 der inneren Kupplungsanordnung abdichtet, wird durch die Rückstellfederanordnung 71 in axialer Anlage am Betätigungskolben 42 gehalten. Zur radialen Fixierung der Dichtungsanordnung 61 sind am Betätigungskolben 42 Zentriernoppen 128 angeordnet, welche am Innenumfang der Dichtungsanordnung 61 diese zentrieren: Die Rückstellfederanordnung 71, weiche aus zwei gleichsinnig geschichteten Tellerfedern besteht, ist mit ihrem Außenumfang an der Dichtungsanordnung 61 geführt. Die Dichtungsanordnung 60 ist auf den. Außenlamellenträger 7 der radial inneren Kupplungsanordnung 72 geschoben und dichtet den Kolbenraum 48 an einem axialen Innenumfangsbereich des Betätigungskolbens 42 nach radial außen hin ab. Die Wandung 130 des Rotationsdruckausgleichsraumes 49 ist zweiteilig ausgeführt und besteht aus den beiden Teilen 131 und 132., wobei das Ringteil 132 radial innerhalb der Ölzuführnabe 44 angeordnet ist und mit rotationssymetrisch am Außenumfang verteilten Federelementen 134 in eine korrespondierende Nut am Innenumfang der Ölzuführnabe 44 eingreift, wodurch eine Axialsicherung der Wandung 130 in Richtung Motor erfolgt.

Die maximale axiale Breite X wird zwischen dem Drehmomentenübertragungsglied 14 und dem getriebeseitigen radialen Erstreckungsbereich 138 des Außenlamellenträgers 6 der radial äußeren Kupplungsanordnung 64 gemessen. Die zwölf Reibpaarungen der radial äußeren Lamellen-Kupplungsanordnung 64 werden durch die sieben Außenlamellen 22 und die sechs belagtragenden Innenlamellen 23 bestimmt. Entsprechend weist die radial innere Kupplungsanordnung 72 zehn Reibpaarungen auf, welche durch die sechs Außenlamellen und die fünf belagtragenden Innenlamellen gebildet werden.

## Patentansprüche

1. Doppelkupplungseinrichtung (12), für die Anordnung in einem Antriebsstrang eines Kraftfahrzeugs zwischen einer Antriebseinheit und einem Getriebe, wobei die Kupplungseinrichtung (12) eine einer ersten Getriebeeingangswelle (22) des Getriebes zugeordnete erste Kupplungsanordnung (64) und eine einer zweiten Getriebeeingangswelle (24) des Getriebes zugeordnete zweite Kupplungsanordnung (72) aufweist zur Momentenübertragung zwischen der Antriebseinheit und dem Getriebe, wobei von den Getriebeeingangswellen wenigstens eine (22, 24) als Hohlwelle ausgebildet ist und eine (22) der Getriebeeingangswellen durch die andere, als Hohlwelle ausgebildete Getriebeeingangswelle (24) verläuft, und wobei die Kupplungsanordnungen (64, 72) eine gemeinsame Ölzufuhrnabe (44) aufweisen, über die sie mittels einer ersten Lageranordnung (4) an der als Hohlwelle ausgebildeten Getriebeeingangswelle (24) gelagert oder lagerbar sind, und wobei eine zweite Lageranordnung (5) zur Lagerung der Doppelkupplungseinrichtung zwischen einem Drehmomentenübertragungsglied (14) und der inneren Getriebeeingangswelle (22) vorgesehen ist,
wobei die erste Langeranordnung getriebeseitig und als ein Radialnadellager auf der äußeren Getriebeeingangswelle ausgeführt ist
**dadurch gekennzeichnet,**
**dass** die zweite Lageranordnung als Rillenkugellager auf der inneren Getriebeeingangswelle ausgeführt ist.

2. Doppelkupplungseinrichtung (12) nach Anspruch1,
**dadurch gekennzeichnet,**
**dass** in einem radial mittleren Bereich des Drehmomentübertragungsgliedes (14) ein mit einem an einem Innenumfangsbereich angeordneten Verzahnungsprofil versehenes Koppelglied (110)zur Ankopplung einer Ausgangsseite (106) eines vorgeschalteten Torsionsschwingungsdämpfers (20) angeordnet ist.

3. Doppelkupplungseinrichtung (12) nach Anspruch 2,
**dadurch gekennzeichnet,**
**dass** an einem Außenumfangsbereich des Koppelgliedes eine einen Nassraum begrenzende Wandung (124)dichtend geführt ist und dass in zumindest einem axialen Teilbereich radial innerhalb des Koppelglieds ein Dichtungselement (116) und/oder eine Radiallageranordnung (5) zwischen dem Drehmomentübertragungsglied (14) und der inneren Getriebeeingangswelle (22)angeordnet ist.

4. Doppelkupplungseinrichtung (12) nach einem der Ansprüche 1 bis 3,
**dadurch gekennzeichnet,**
**dass** die beiden Kupplungsanordnungen (64, 72) mittels hydraulisch betätigbarer Kolben (40, 42) betätigbare Lamellenpakete aufweisen, welche jeweils mit einem Innenlamellenträger (50, 51) drehfest angeordnete Innenlamellen (23) und mit einem Außenlamellenträger (6, 7) drehfest angeordnete Außenlamellen (22) aufweisen und wobei zur Kühlung der Lamellenpakete die Doppelkupplungseinrichtung (12) von radial innen im Wesentlichen nach radial Außen mit Kühlöl durchströmt wird und wobei den Betätigungskolben (40, 42) jeweils ein, an eine Kühlölversorgung angeschlossener, Rotationsdruckausgleichsraum (47, 49) zugeordnet ist, wobei ein Axialbereich (140) des der radial äußeren Kupplung zugeordneten Kolbens (40) bei betätigter Kupplungsanordnung radial innerhalb eines Axialbereichs (142) des der inneren Kupplungsanordnung zugehörigen Außenlamellenträgers (7) eingeschoben ist.

5. Doppelkupplungseinrichtung (12) nach einem der vorhergehenden Ansprüche, **dadurch gekennzeichnet,**
**dass** das Drehmomentübertragungsglied (14) an seinem Außenumfang mit einem zylindrischen Endbereich des Außenlamellenträgers (6) der radial äußeren Kupplungsanordnung (64) verschweißt ist, wobei der Außendurchmesser des zylindrischen Endbereichs größer als der Außendurchmesser des lamellentragenden Verzahnungsbereiches des Außenlamellenträgers (6) ausgebildet ist.

6. Doppelkupplungseinrichtung (12) nach Anspruch 4,
**dadurch gekennzeichnet,**
**dass** den beiden Betätigungskolben (40, 42) jeweils ein abgedichteter Kolbenraum (46, 48) und ein abgedichteter Rotationsdruckausgleichsraum (47, 49) zugeordnet ist, welche jeweils nach radial außen mit einer separaten Dichtungsanordnung (60, 61, 62, 63) abgedichtet sind und wobei zumindest die Dichtungsanordnungen (60, 61) des Kolbenraums (48) und des Rotationsdruckausgleichsraums (49) der inneren Kupplungsanordnung (72)durch Haftreibung oder Federkraft in Anlage mit einem die Dichtungsanordnungen tragenden Bauteil (7, 42) gehalten werden und wobei die Kolbenräume (46, 48) nach radial innen jeweils mit einem in einer Ringnut der Ölzuführnabe (44) angeordnetem Dichtungselement (74, 76) zu den zugeordneten Rotationsdruckausgleichsräumen (47, 49) hin abgedichtet sind.

## Claims

1. Double clutch device (12) for arranging in a drivetrain of a motor vehicle between a drive unit and a gearbox, wherein the clutch device (12) has a first clutch arrangement (64) assigned to a first gearbox input shaft (22) of the gearbox, and has a second clutch arrangement (72) assigned to a second gearbox input shaft (24) of the gearbox, for transmitting torque between the drive unit and the gearbox, wherein at least one (22, 24) of the gearbox input shafts is formed as a hollow shaft and one (22) of the gearbox input shafts runs through the other gearbox input shaft (24) formed as a hollow shaft, and wherein the clutch arrangements (64, 72) have a common oil supply hub (44) by means of which they are or can be mounted by means of a first bearing arrangement (4) on the gearbox input shaft (24) formed as a hollow shaft, and wherein a second bearing arrangement (5) for mounting the double clutch device is provided between a torque-transmitting element (14) and the inner gearbox input shaft (22), wherein the first bearing arrangement is formed on the gearbox side and as a radial needle-roller bearing on the outer gearbox input shaft,
**characterized**
**in that** the second bearing arrangement is formed as a deep-groove ball bearing on the inner gearbox input shaft.

2. Double clutch device (12) according to Claim 1,
**characterized**
**in that** a coupling element (110) which is provided with a toothing profile arranged on an inner circumferential region and which serves for coupling to an output side (106) of an upstream torsional vibration damper (20) is arranged in a radially central region of the torque-transmitting element (14).

3. Double clutch device (12) according to Claim 2,
**characterized**
**in that** a wall (124) which delimits a wet space is guided in a sealing fashion on an outer circumferential region of the coupling element, and in that, in at least one axial partial region radially within the coupling element, a seal element (116) and/or a radial bearing arrangement (5) is arranged between the torque-transmitting element (14) and the inner gearbox input shaft (22).

4. Double clutch device (12) according to one of Claims 1 to 3,
**characterized**
**in that** the two clutch arrangements (64, 72) have plate packs which can be actuated by means of hydraulically actuable pistons (40, 42) and which each have inner plates (23) arranged for conjoint rotation with an inner plate carrier (50, 51) and outer plates (22) arranged for conjoint rotation with an outer plate carrier (6, 7), and wherein, for the cooling of the plate packs, cooling oil flows through the double clutch (12) from radially inside substantially radially outwards, and wherein the actuating pistons (40, 42) are assigned in each case one rotational pressure compensation chamber (47, 49) connected to a cooling oil supply, wherein, when the clutch arrangement is actuated, an axial region (140) of the piston (40) assigned to the radially outer clutch is pushed radially within an axial region (142) of the outer plate carrier (7) associated with the inner clutch arrangement.

5. Double clutch device (12) according to one of the preceding claims,
**characterized**
**in that** the torque transmission element (14) is welded, at its outer circumference, to a cylindrical end region of the outer plate carrier (6) of the radially outer clutch arrangement (64), wherein the outer diameter of the cylindrical end region is greater than the outer diameter of the plate-carrying toothing region of the outer plate carrier (6).

6. Double clutch device (12) according to Claim 4,
**characterized**
**in that** the two actuating pistons (40, 42) are assigned in each case one sealed piston chamber (46, 48) and one sealed rotational pressure compensation chamber (47, 49) which are in each case sealed off in the radially outward direction by means of a separate seal arrangement (60, 61, 62, 63), and wherein at least the seal arrangements (60, 61) of the piston chamber (48) and of the rotational pressure compensation chamber (49) of the inner clutch arrangement (72) are held in contact, by static friction or spring force, with a component (7, 42) which bears the seal arrangements, and wherein the piston chambers (46, 48) are sealed off in the radially inward direction with respect to the associated rotational pressure compensation chambers (47, 49) in each case by means of a seal element (74, 76) arranged in an annular groove of the oil supply hub (44).

## Revendications

1. Dispositif de double embrayage (12), pour l'agencement dans une chaîne cinématique d'un véhicule automobile, entre une unité d'entraînement et une transmission, le dispositif d'embrayage (12) présentant un premier agencement d'embrayage (64) associé à un premier arbre d'entrée de transmission (22) de la transmission et un deuxième agencement d'embrayage (72) associé à un deuxième arbre d'entrée de transmission (24) de la transmission, pour le transfert de couple entre l'unité d'entraînement et la transmission, au moins l'un des arbres d'entrée de transmission (22, 24) étant réalisé sous forme d'arbre creux et l'un (22) des arbres d'entrée de transmission s'étendant à travers l'autre arbre d'entrée de transmission (24) réalisé sous forme d'arbre creux, et les agencements d'embrayage (64, 72) présentant un moyeu d'alimentation en huile commun (44) par le biais duquel ils sont supportés ou peuvent être supportés au moyen d'un premier agencement de palier (4) sur l'arbre d'entrée de transmission (24) réalisé sous forme d'arbre creux, et un deuxième agencement de palier (5) étant prévu pour le support du dispositif de double embrayage entre un organe de transfert de couple (14) et l'arbre d'entrée de transmission intérieur (22), le premier agencement de palier étant réalisé du côté de la transmission et sous forme de palier à aiguilles radial sur l'arbre d'entrée de transmission extérieur,
**caractérisé en ce que**
le deuxième agencement de palier est réalisé sous forme de palier rainuré à billes sur l'arbre d'entrée de transmission intérieur.

2. Dispositif de double embrayage (12) selon la revendication 1,
**caractérisé en ce que**
dans une région radialement centrale de l'organe de transfert de couple (14) est disposé un organe d'accouplement (110) pourvu d'un profil de denture disposé sur une région périphérique interne pour l'accouplement d'un côté de sortie (106) d'un amortisseur d'oscillations de torsion (20) monté en amont.

3. Dispositif de double embrayage (12) selon la revendication 2,
**caractérisé en ce**
**qu'**une paroi (124) limitant un espace humide est guidée de manière hermétique sur une région périphérique extérieure de l'organe d'accouplement et en ce que dans au moins une région partielle axiale radialement à l'intérieur de l'organe d'accouplement, un élément d'étanchéité (116) et/ou un agencement de palier radial (5) sont disposés entre l'organe de transfert de couple (14) et l'arbre d'entrée de transmission intérieur (22).

4. Dispositif de double embrayage (12) selon l'une quelconque des revendications 1 à 3,
**caractérisé en ce que**
les deux agencements d'embrayage (64, 72) présentent des paquets de disques pouvant être actionnés au moyen de pistons (40, 42) à commande hydraulique, lesquels paquets de disques présentent à chaque fois des disques intérieurs (23) disposés de manière solidaire en rotation avec un support de disques intérieurs (50, 51) et des disques extérieurs (22) disposés de manière solidaire en rotation avec un support de disques extérieurs (6, 7), et le dispositif de double embrayage (12) étant parcouru par de l'huile de refroidissement radialement de l'intérieur essentiellement radialement vers l'extérieur pour refroidir les paquets de disques et un espace de compensation de la pression de rotation (47, 49) raccordé a une alimentation en huile de refroidissement étant à chaque fois associé aux pistons d'actionnement (40, 42), une région axiale (140) du piston (40) associé à l'embrayage radialement extérieur étant enfoncée radialement à l'intérieur d'une région axiale (142) du support de disques extérieurs (7) associé à l'agencement d'embrayage intérieur lorsque l'agencement d'embrayage est actionné.

5. Dispositif de double embrayage (12) selon l'une quelconque des revendications précédentes,
**caractérisé en ce que**
l'organe de transfert de couple (14) est soudé au niveau de sa périphérie extérieure à une région d'extrémité cylindrique du support de disques extérieurs (6) de l'agencement d'embrayage extérieur (64), le diamètre extérieur de la région d'extrémité cylindrique étant supérieur au diamètre extérieur de la région de denture portant les disques du support de disques extérieurs (6).

6. Dispositif de double embrayage (12) selon la revendication 4,
**caractérisé en ce**
**qu'**un espace de piston étanché (46, 48) et un espace de compensation de la pression de rotation (47, 49) sont à chaque fois associés aux deux pistons d'actionnement (40, 42), lesquels sont étanchés à chaque fois radialement vers l'extérieur avec un agencement d'étanchéité séparé (60, 61, 62, 63), et au moins les agencements d'étanchéité (60, 61) de l'espace de piston (48) et de l'espace de compensation de la pression de rotation (49) de l'agencement d'embrayage intérieur (72) étant maintenus par frottement d'adhésion ou par la force d'un ressort en appui avec un composant (7, 42) portant les agencements d'étanchéité, et les espaces de piston (46, 48) étant étanchés radialement vers l'intérieur à chaque fois avec un élément d'étanchéité (74, 76) disposé dans une rainure annulaire du moyeu d'alimentation en huile (44) en direction des espaces de compensation de la pression de rotation associés (47, 49).
